# EUROPEAN PATENT APPLICATION

(11) **EP 3 072 611 A2**
(43) Date of publication of application: **28.09.2016**
(21) Application number: 16161709.7
(22) Date of filing: 22.03.2016
(51) Int. Cl.: B22F 3/105, B22F 3/15

(54) **NET-SHAPE OR NEAR-NET SHAPE POWDER METAL COMPONENTS AND METHODS FOR PRODUCING THE SAME**

(30) Priority: 26.03.2015 US 201514669111
(71) Applicant: Honeywell International Inc., Morris Plains, NJ 07950 (US)
(72) Inventor: HANN, Brian, Morris Plains, NJ New Jersey 07950 (US); KANTZOS, Pete, Morris Plains, NJ New Jersey 07950 (US)
(74) Representative: Houghton, Mark Phillip

(57) **Abstract**

The present disclosure relates to net-shape or near-net shape articles of manufacture and methods for producing the same. For example, a method for manufacturing net-shape or near-net shape metallic article includes the steps of: forming, using an additive manufacturing process, a metal can comprising a hollow interior portion, filling the hollow interior portion with a metal powder, and subjecting the metal can filled with the metal powder to a hot isostatic pressing (HIP) process to densify the metal powder. As another example, a net-shape or near-net shape metallic article of manufacture includes a metallic outer shell portion having a layer-by-layer fused microstructure that exhibits anisotropic mechanical and physical properties and a metallic inner core portion having a pressure-densified microstructure that exhibits isotropic mechanical and physical properties.

## Description

### TECHNICAL FIELD

Embodiments of the present disclosure generally relate to metallic articles of manufacture and methods for producing the same. More particularly, the present disclosure relates to net-shape or near-net shape powder metal components and methods for producing the same.

### BACKGROUND

Additive manufacturing provides obvious manufacturing benefits with the design flexibility that it offers. However, it has been shown that many materials respond to additive manufacturing processing in unexpected ways. For example, anisotropic behavior, in both physical and mechanical properties, is common. This anisotropic behavior is likely attributed to a textured microstructure, resulting from the nature of the additive manufacturing process, which involves the fusion of powder particles, layer-by-layer, until the final part geometry is achieved. Though subsequent thermal processing appears to remove obvious artifacts associated with this layering (*see*, *e.g*., Etter et al., U.S. 2014/0053956 A1), mechanical property testing reveals significant differences in physical properties (i.e., modulus) between the directions relative to the orientation of the build direction.

Accordingly, the prior art remains lacking in methods that harness the design flexibility of additive manufacturing, yet still produce manufactured articles that exhibit isotropic physical and mechanical properties. The present disclosure addresses at least this need.

### BRIEF SUMMARY

The present disclosure relates to net-shape or near-net shape articles of manufacture and methods for producing the same. In accordance with an exemplary embodiment, a method for manufacturing net-shape or near-net shape metallic article includes the steps of: forming, using an additive manufacturing process, a metal can comprising a hollow interior portion, filling the hollow interior portion with a metal powder, and subjecting the metal can filled with the metal powder to a hot isostatic pressing (HIP) process to densify the metal powder.

In accordance with another exemplary embodiment, a net-shape or near-net shape metallic article of manufacture includes a metallic outer shell portion having a layer-by-layer fused microstructure that exhibits anisotropic mechanical and physical properties and a metallic inner core portion having a pressure-densified microstructure that exhibits isotropic mechanical and physical properties.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

The present disclosure will hereinafter be described in conjunction with the following drawing figures, wherein like numerals denote like elements, and wherein:
FIG. 1 is a flow diagram illustrating steps in a method for manufacturing net-shape or near-net shape powder metal components in accordance with an exemplary embodiment of the present disclosure;
FIG. 2 is a flow diagram illustrating steps in an additive manufacturing method in accordance with the method illustrated in FIG. 1;
FIG. 3 is an exemplary additive manufacturing system suitable for use with the method illustrated in FIG. 2; and
FIG. 4 is an exemplary hybrid additive manufactured / HIP-processed article that has been produced in accordance with the method shown in FIG. 1; and
FIG. 5 is an exemplary densified metal powder article that has been produced in accordance with the method shown in FIG. 1.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments and implementations of the aluminum alloys and methods for the manufacture thereof described herein are exemplary embodiments provided to enable persons skilled in the art to make or use the invention and not to limit the scope of the invention, which is defined by the claims. Furthermore, there is no intention to be bound by any expressed or implied theory presented in the preceding technical field, background, brief summary, or the following detailed description.

Disclosed herein are net-shape or near-net shape powder metal components and methods for producing the same. As used herein, the term "net-shape" refers to an article that requires no post-densification machining or re-shaping to meet its final design shape criteria. The term "near-net shape" refers to an article that requires only minimal post-densification trimming or re-shaping to meet its final design shape criteria. As such, Applicants intend the terms "net-shape" and "near-net shape" to be understood as commonly used in the art as of the date of this disclosure.

In contrast to the above-noted additive manufacturing-formed articles that tend to exhibit anisotropic properties, hot isostatic press (HIP)-formed articles exhibit isotropic physic and mechanical properties (such articles will hereinafter be referred to with the term "as-HIP" articles). As is commonly known in the art, as-HIP articles may be formed by inserting a metallic powder into a cast metal die or "can" (the cast metal can being formed in the shape of the desired as-HIP article), hermetically sealing the powder within the can, subjecting the metal can filled with the metal powder to a HIP process, and thereafter removing the densified as-HIP article from the can. (*See*, *e.g.,* Hall et al., U.S. 2009/0274923 A1) The as-HIP article formed in this manner may be a net-shape or near-net shape article. To this date, however, no attempts have been made to synergize the design flexibility of additive manufacturing processes with the desirable material properties of as-HIP processes.

As such, in accordance with exemplary embodiments of the present disclosure, the Applicants herein describe the use of powder bed additive manufacturing processes to manufacture the metal can used to containerize and hermetically seal non-fused metal powder for subsequent densification with HIP. The can and the non-fused powder may or may not be the same material. Further, the can may or may not be removed via subsequent processing. The end result is a metallic article of manufacture with properties consistent with as-HIP processing with the design complexities offered by additive manufacturing.

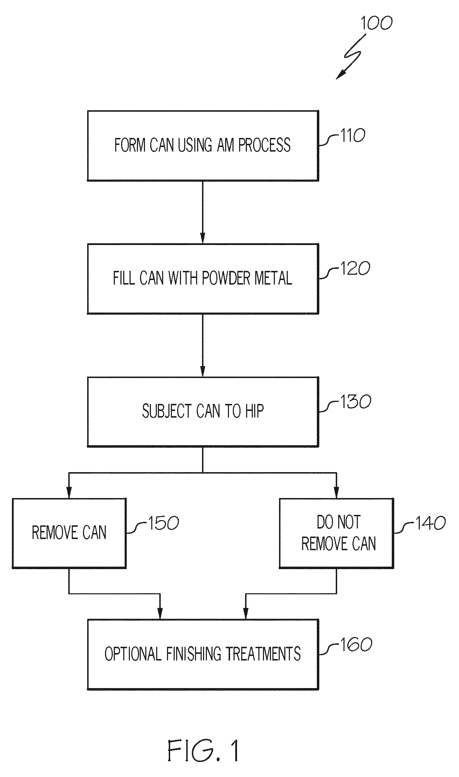

FIG. 1 is a flow diagram illustrating steps in a method 100 for manufacturing net-shape or near-net shape powder metal components in accordance with an exemplary embodiment of the present disclosure. The method 100 includes a first step 110 of forming, using an additive manufacturing process, a metal can comprising a hollow interior portion. Additive manufacturing processes can be used to produce complex geometries in a single operation with no tooling. Additive manufacturing technology allows for the can to be produced at a net-shape or near-net shape without the application of the heating, casting, or forging processes commonly used in the prior art.

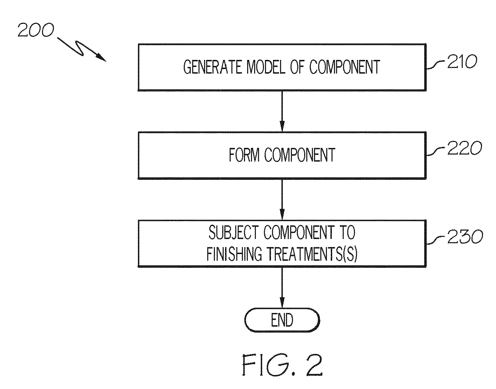

FIG. 2 is a flowchart illustrating a method 200 for manufacturing the can using additive manufacturing techniques. In a first step 210, a model, such as a design model, of the can may be defined in any suitable manner. For example, the model may be designed with computer aided design (CAD) software and may include three-dimensional ("3D") numeric coordinates of the entire configuration of the component including both external and internal surfaces. In one exemplary embodiment, the model may include a number of successive two-dimensional ("2D") cross-sectional slices that together form the 3D component. The 3D model of the can may be designed according to whether or not the can is to be ultimately removed from the densified metal powder. For example, where the can is to be removed (as discussed in greater detail below), the outer shape and dimensions of the can are relatively less important as compared to the shape of the hollow interior portion where the metal powder is to be filled. In these embodiments, where the can is removed, the hollow interior portion defines the net-shape or near-net shape of the article, and as such care should be taken to ensure that the hollow interior portion is designed with the final specification of the article in mind. In contrast, where the can is not to be removed and thus forms a portion of the net-shape or near-net shape article, care should be taken to ensure the outer shape and dimensions of the can, as well as the hollow interior portion, meet the final specification of the article.

In step 220 of the method 200, the can is formed according to the model of step 210. In one exemplary embodiment, the entire can is formed using a rapid prototyping or additive layer manufacturing process. Some examples of additive layer manufacturing processes include: selective laser sintering in which a laser is used to sinter a powder media in precisely controlled locations; laser wire deposition in which a wire feedstock is melted by a laser and then deposited and solidified in precise locations to build the product; electron beam melting; laser engineered net shaping; and direct metal deposition. In general, additive manufacturing techniques provide flexibility in free-form fabrication without geometric constraints, fast material processing time, and innovative joining techniques. In one particular exemplary embodiment, direct metal laser fusion (DMLF) is used to produce the can in step 220. DMLF is a commercially-available, laser-based rapid prototyping and tooling process by which complex parts may be directly produced by precision melting and solidification of metal powder into successive layers of larger structures, each layer corresponding to a cross-sectional layer of the 3D component.

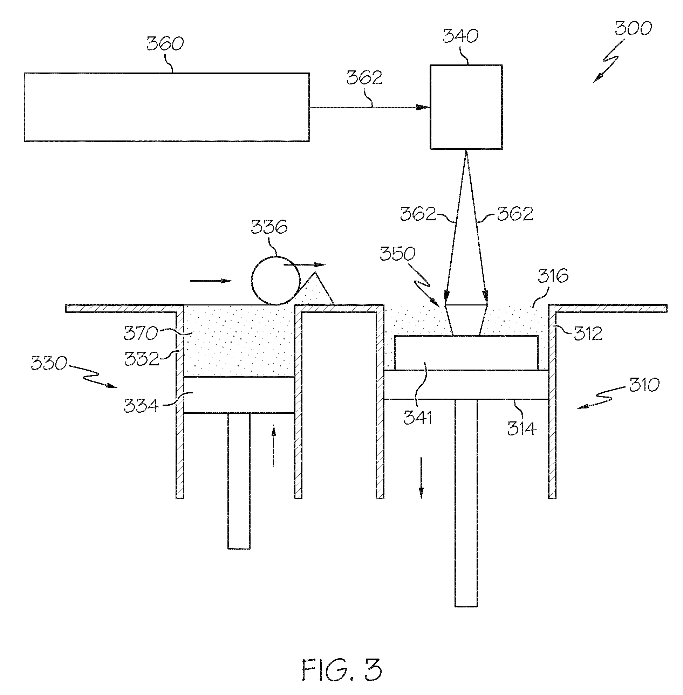

As such, in one exemplary embodiment, step 220 is performed with DMLF techniques to form the can. However, prior to a discussion of the subsequent method steps, reference is made to FIG. 3, which is a schematic view of a DMLF system 300 for manufacturing the can for use in an as-HIP process in accordance with an exemplary embodiment.

Referring to FIG. 3, the system 300 includes a fabrication device 310, a powder delivery device 330, a scanner 340, and a laser 360 that function to manufacture the article 350 (e.g., the can) with build material 370. The fabrication device 310 includes a build container 312 with a fabrication support 314 on which the article 350 is formed and supported. The fabrication support 314 is movable within the build container 312 in a vertical direction and is adjusted in such a way to define a working plane 316. The delivery device 330 includes a powder chamber 332 with a delivery support 334 that supports the build material 370 and is also movable in the vertical direction. The delivery device 330 further includes a roller or wiper 336 that transfers build material 370 from the delivery device 330 to the fabrication device 310.

During operation, a base block 341 may be installed on the fabrication support 314. The fabrication support 314 is lowered and the delivery support 334 is raised. The roller or wiper 336 scrapes or otherwise pushes a portion of the build material 370 from the delivery device 330 to form the working plane 316 in the fabrication device 310. The laser 360 emits a laser beam 362, which is directed by the scanner 340 onto the build material 370 in the working plane 316 to selectively fuse the build material 370 into a cross-sectional layer of the article 350 according to the design. More specifically, the speed, position, and other operating parameters of the laser beam 362 are controlled to selectively fuse the powder of the build material 370 into larger structures by rapidly melting the powder particles that may melt or diffuse into the solid structure below, and subsequently, cool and re-solidify. As such, based on the control of the laser beam 362, each layer of build material 370 may include unfused and fused build material 370 that respectively corresponds to the cross-sectional passages and walls that form the article 350. In general, the laser beam 362 is relatively low power to selectively fuse the individual layer of build material 370. As an example, the laser beam 362 may have a power of approximately 50 to 500 Watts, although any suitable power may be provided.

Upon completion of a respective layer, the fabrication support 314 is lowered and the delivery support 334 is raised. Typically, the fabrication support 314, and thus the article 350, does not move in a horizontal plane during this step. The roller or wiper 336 again pushes a portion of the build material 370 from the delivery device 330 to form an additional layer of build material 370 on the working plane 316 of the fabrication device 310. The laser beam 362 is movably supported relative to the article 350 and is again controlled to selectively form another cross-sectional layer. As such, the article 350 is positioned in a bed of build material 370 as the successive layers are formed such that the unfused and fused material supports subsequent layers. This process is continued according to the modeled design as successive cross-sectional layers are formed into the completed desired portion, e.g., the component of step 220.

The delivery of build material 370 and movement of the article 350 in the vertical direction are relatively constant and only the movement of the laser beam 362 is selectively controlled to provide a simpler and more precise implementation. The localized fusing of the build material 370 enables more precise placement of fused material to reduce or eliminate the occurrence of over-deposition of material and excessive energy or heat, which may otherwise result in cracking or distortion. The unused and unfused build material 370 may be reused, thereby further reducing scrap.

Any suitable laser and laser parameters may be used, including considerations with respect to power, laser beam spot size, and scanning velocity. The build material 370 is provided as metal alloy in powder form. Non-limiting examples of such metal alloys are as follows: Ni-based alloys including Waspaloy®, Hastelloy® X, IN617®, IN718®, IN625®, Mar-M247®, IN100®, IN738®, 1N792®, Mar-M200®, B1900®, RENE 80®, Alloy 713®, Haynes 230®, Haynes 282®, and others; Co-based alloys including FSX 414®, X-40®R, X-45®, MAR-M 509®R or MAR-M 302®, and others; and Fe-based alloys including A 286®, Alloy 800 H®, N 155® , S 590®, Alloy 802®, Incoloy MA 956®, Incoloy MA 957® or PM 2000®, and others. In general, the powder build material 370 may be selected based on one or more of strength, durability, and useful life, particularly at high temperatures, although it should be appreciated that the powder build material 370 may also be selected based on the intended function of the article being formed. The powdered form of the alloy is produced by combining the various constituents (metals and other elements) of the alloy into a mixture, melting the mixture, and atomizing the melted mixture to form a powder, a process which is well-known in the art.

Returning to FIG. 2, at the completion of step 220, the can may be given a stress relief treatment, and then is removed from the additive manufacturing system (e.g., from the DMLF system 300). In optional step 230, the component formed in step 220 may undergo finishing treatments. Finishing treatments may include, for example, polishing, peening, and/or the application of coatings. If necessary, the component may be machined to final specifications. The can, produced using additive manufacturing techniques, has a layer-by-layer fused microstructure that exhibits anisotropic mechanical and physical properties.

It should be appreciated that, during formation of the can, some powder may remain in the can or be "trapped" therein. As an alternative to or in addition to adding powder at a later step (discussed below), it may be desirable to leave such trapped powder in place, hermetically seal the can, and perform the HIP process.

Returning to FIG. 1, after performing step 110, step 120 is performed, which includes filling the hollow interior portion of the can with a metal powder. The metal powder may be the same metal alloy as used to form the can, or it may be a different metal allow powder. Non-limiting examples of such metal alloys are as follows: Ni-based alloys including Waspaloy®, Hastelloy® X, IN617®, IN718®, IN625®, Mar-M247®, IN100®, IN738®, 1N792®, Mar-M200®, B1900®, RENE 80®, Alloy 713®, Haynes 230®, Haynes 282®, and others; Co-based alloys including FSX 414®, X-40®, X-45®, MAR-M 509® or MAR-M 302®, and others; and Fe-based alloys including A 286®, Alloy 800 H®, N 155®, S 590®, Alloy 802®, Incoloy MA 956®, Incoloy MA 957® or PM 2000®, and others. In general, the metal powder for insertion into the hollow interior portion of the can may be selected based on one or more of strength, durability, and useful life, particularly at high temperatures, although it should be appreciated that the metal powder may also be selected based on the intended function of the article being formed. The powdered form of the alloy is produced by combining the various constituents (metals and other elements) of the alloy into a mixture, melting the mixture, and atomizing the melted mixture to form a powder, a process which is well-known in the art.

To ensure appropriate densification of the metal powder filled within the hollow interior portion of the can, the metal powder may be hermetically sealed within the can, prior to subjecting the can and the metal powder to the HIP process. For example, the can may be manufactured with an opening that is used to fill the interior portion thereof with the powder metal, and the opening is subsequently hermetically sealed using a conventional technique such as welding or brazing. In another example, the can may be manufactured in two parts, each part defining a portion (e.g., half) of the hollow interior, and the two portions may be joined together with metal powder therein using conventional techniques such as welding or brazing.

The method 100 continues with a step 130 of subjecting the metal can filled with the metal powder to a hot isostatic pressing (HIP) process to densify the metal powder. The HIP process utilized in step 130 may proceed in with any suitable conditions. In exemplary processes, the HIP process may utilize an isostatic pressure of about 30,000 pounds per square inch (psi) in combination with a temperature of about 1500 °C. The pressure and temperature may, however, be any suitable conditions, and accordingly the temperature may also be less than 1500 °C in some embodiments and greater than 1500 °C in other embodiments (e.g., from 500 °C to 2200 °C); and the pressure may be less than 30,000 psi in some embodiments and greater than 30,000 psi in other embodiments (e.g., from 15,000 psi to 45,000 psi). The can with the metal powder therein may be subjected to such HIP conditions for any suitable time period in order to densify the solid powder depending on the temperature and pressure used, for example from several minutes to several hours or more. The densified metal powder within the interior portion of the can, which results from the HIP processing, has a pressure-densified microstructure that exhibits isotropic mechanical and physical properties.

As initially noted above, the can may or may not be removed via subsequent processing. As such, subsequent to step 130, the method 100 proceeds either to step 140 where the can is not removed or step 150 where the can is removed. According to step 140, where the can is not removed, the metallic article that results is referred to herein as a hybrid additive manufactured / HIP-processed article. This hybrid articles includes a metallic outer shell portion (i.e., the can left in place) having a layer-by-layer fused microstructure that exhibits anisotropic mechanical and physical properties as a result of the additive manufacturing process used to form the can, and it also has a metallic inner core portion having a pressure-densified microstructure that exhibits isotropic mechanical and physical properties as a result of the as-HIP densified metal powder.

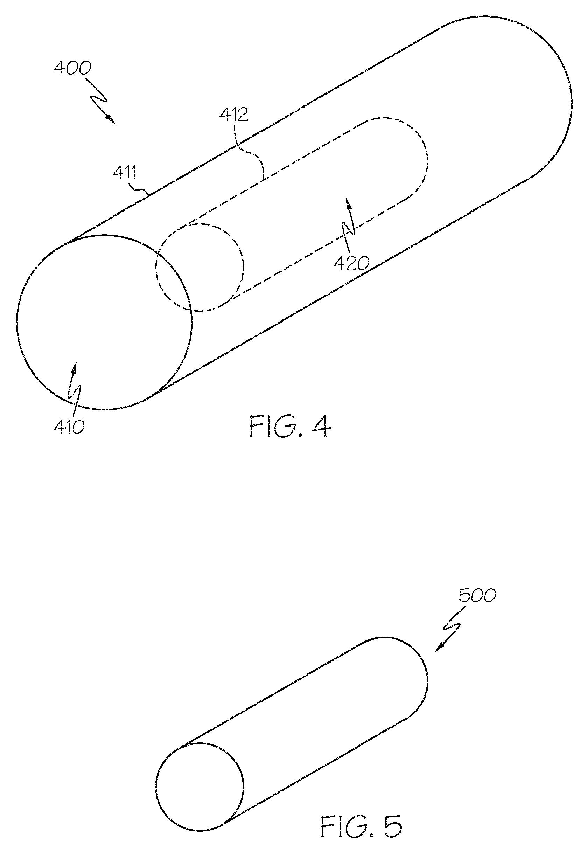

FIG. 4 illustrates a hybrid additive manufactured / HIP-processed article in accordance with a simplified embodiment. By "simplified," Applicants mean that the shape of the article shown is very basic (i.e., a cylinder) and is provided for purposes of illustrating the outer shell portion and the inner core portion, while not intending to be limiting with respect to any particular shape of the article. As shown in FIG. 4, the simplified article 400 includes an outer shell portion 410 in the shape of a cylinder at its outer bounds 411. The interior of the outer shell portion 410 is further defined by a cylindrical shape 412. The interior cylindrical shape 412 defines the outer bounds of the inner core portion 420.

In the alternative, according to step 150, the subsequent processing to remove the can may include, for example, a machining process that allows for the separation of the can from the densified metal powder article enclosed therewith that was formed as a result of the as-HIP processing. In one example, the can may be machined so as to separate the can into one or more portions (such as halves), and then the one or more portions may be physically removed from over the densified metal powder article. Of course, it will be appreciated that in some embodiments, it may be desirable to remove only portions of the can, leaving some of the can remaining over the densified metal powder article. In alternative embodiments, chemically processing may be used to remove the can from the densified metal powder article.

FIG. 5 illustrates a densified metal powder article in accordance with a simplified embodiment. By "simplified," Applicants mean that the shape of the article shown is very basic (i.e., a cylinder) and is provided for purposes of illustrating the article, while not intending to be limiting with respect to any particular shape of the article. As shown in FIG. 5, the simplified article 500 includes is provided in the shape of a cylinder, similar in configuration and size to the inner core portion 420 of FIG. 4 (from which it would be derived).

Proceeding from either step 140 or 150, the method 100 concludes with an optional step 160 of subjecting the densified metal powder article (where the can was removed) or the hybrid article (where the can was not removed) to a finishing treatment. Exemplary, non-limiting finishing treatments can include polishing, peening, and/or the application of coatings. Moreover, where the process described above formed a near-net shaped article, the finishing treatments may further include machining or reshaping to form the completed article.

Accordingly, the present disclosure has provided net-shape or near-net shape powder metal components and methods for producing the same. The disclosure employs the use of powder bed additive manufacturing processes to manufacture the metal can used to containerize and hermetically seal non-fused metal powder for subsequent densification with HIP. As such, the described embodiments beneficially synergize the design flexibility of additive manufacturing processes with the desirable material properties of as-HIP processes.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. Various changes may be made in the function and arrangement of elements described in an exemplary embodiment without departing from the scope of the invention as set forth in the appended claims.

## Claims

1. A method for manufacturing net-shape or near-net shape metallic article comprising the steps of:
forming, using an additive manufacturing process, a metal can comprising a hollow interior portion;
filling the hollow interior portion with a metal powder;
subjecting the metal can filled with the metal powder to a hot isostatic pressing (HIP) process to densify the metal powder.

2. The method of claim 1, wherein the additive manufacturing process is selected from the group consisting of: direct metal laser fusion (DMLF) and electron beam melting (EBM).

3. The method of claim 1, further comprising the step of hermetically sealing the metal can filled with the metal powder prior to the step of HIP.

4. The method of claim 1, wherein the metal can and the metal powder comprise the same or different metal materials.

5. The method of claim 1, further comprising the step of removing the metal can from the densified metal powder, thereby leaving a densified metal powder article.

6. The method of claim 5, further comprising subjecting the densified metal powder article to a finishing treatment.

7. The method of claim 1, wherein the metal can is not removed from the densified metal powder, thereby leaving a hybrid additive manufactured / HIP-processed article.

8. The method of claim 7, further comprising subjecting the hybrid article to a finishing treatment.

9. A net-shape or near-net shape metallic article of manufacture comprising:
a metallic outer shell portion having a layer-by-layer fused microstructure that exhibits anisotropic mechanical and physical properties; and
a metallic inner core portion having a pressure-densified microstructure that exhibits isotropic mechanical and physical properties.

10. The metallic article of manufacture of claim 9, wherein the metallic outer shell portion and the metallic inner core portion comprise the same or different metal materials.
